# EUROPÄISCHE PATENTSCHRIFT

(11) **EP 2 193 562 B1**
(45) Veröffentlichungstag und Bekanntmachung des Hinweises auf die Patenterteilung: **12.01.2011**
(21) Anmeldenummer: 08787472.3
(22) Anmeldetag: 26.08.2008
(51) Int. Cl.: H01M 2/10

(54) **AKKUPACK**
BATTERY PACK
BLOC D'ACCUMULATEUR

(30) Priorität: 21.09.2007 DE 202007014418 U; 15.10.2007 DE 102007049358
(43) Veröffentlichungstag der Anmeldung: 09.06.2010
(73) Patentinhaber: Robert Bosch GmbH, 70442 Stuttgart (DE)
(72) Erfinder: REJMAN, Marcin, 71332 Waiblingen (DE); MATTHIAS, Wolf, 70469 Stuttgart (DE); BAUMGARTNER, Josef, 70376 Stuttgart (DE); BREITENBACH, Jan, 70569 Stuttgart (DE); SEIDEL, Thorsten, 71686 Remseck Am Neckar (DE); GLAUNING, Rainer, 72631 Aichtal-Groetzingen (DE)
(86) Internationale Anmeldenummer: PCT/EP2008/061124
(87) Internationale Veröffentlichungsnummer: WO 2009/040200

(56) Entgegenhaltungen:
- WO-A-2007/066919
- GB-A- 2 281 810
- JP-A- 3 190 052
- JP-A- 9 045 377
- JP-A- 9 219 182
- JP-A- 11 204 091

## Beschreibung

### Stand der Technik

Die Erfindung betrifft einen Akkupack, insbesondere für eine Handwerkzeugmaschine, nach dem Oberbegriff des Anspruchs 1.

Anstelle des Netzbetriebs für die Spannungsversorgung sind zahlreiche Handwerkzeugmaschinen mit aufladbaren Akkupacks ausgestattet. Die Akkupacks bestehen aus mehreren elektrisch zusammen geschalteten Akkuzellen, die in einem Gehäuse untergebracht sind. Die Akkuzellen haben meist eine im Wesentlichen zylindrische Form. Die mechanischen Abmessungen unterliegen in der Regel internationalen Normen, die jedoch sehr große Toleranzen zulassen. Die Toleranzen liegen im Bereich von bis zu 1 mm, was im Vergleich zu sonst in der Konstruktion üblichen Toleranzfeldgrößen von 0,2 bis 0,4 mm bei gleichen Hauptabmessungen eine deutlich größere Toleranz bedeutet.

Infolge dieser starken Toleranzen ist es erforderlich, das Gehäuse des Akkupacks auf Größtmaß zu konstruieren. Dies führt allerdings dazu, dass einige oder alle Akkuzellen in dem Gehäuse mit Spiel aufgenommen sind. In diesem Fall wird das Spiel z.B. durch Schaumstoffeinlagen ausgeglichen. Diese Schaumstoffeinlagen haben jedoch den Nachteil, dass zum einen aufgrund eines möglichen Druckverformungsrests die mechanische Spannung der Schaumstoffeinlage mit der Zeit abnimmt, wodurch die Akkuzellen in dem Gehäuse wieder an Spiel gewinnen und nicht mehr fest sitzen. Zum anderen haben Schaumstoffeinlagen den Nachteil, dass sie eine gute wärmeisolierende Wirkung haben. Dies ist in einem Akkupack unerwünscht, da die im Betrieb oder beim Laden des Akkupacks entstehende Wärme möglichst rasch abgeführt werden soll.

Alternativ ist aus dem Stand der Technik bekannt, ein elastisches Gehäuse vorzusehen, um die Durchmessertoleranzen der Zellen auszugleichen. Ein elastisches Gehäuse ist nachteilig, weil das Design des Akkupacks dabei stark von der Elastizität des Gehäuses beeinflusst ist. Ferner müssen auch die übrigen Komponenten wie Verschraubungen auf die Elastizität des Gehäuses abgestimmt sein. Schließlich ist ein elastisches Gehäuse nicht vorteilhaft, weil durch die elastische Verformung das Gehäuse in Abhängigkeit der tatsächlichen Abmessungen der darin enthaltenen Akkuzellen unterschiedlich stark mechanisch belastet wird.

JP 11204091 A beschreibt ein Batteriegehäuse mit variabler Batteriefachgröße. Eine Bodenplatte in dem Batteriegehäuse ist mit Hilfe von Federelementen vertikal bewegbar ausgestaltet

JP 03190052 A beschreibt einen Batteriepack mit elastischem Material, welches in den Raum zwischen Batteriezelle und Batteriepackgehäuse zum Zwecke der Schwingungsdämpfung eingeführt wird.

### Offenbarung der Erfindung

Die Erfindung geht aus von einem Akkupack mit einem Gehäuse und mindestens einer Akkuzellen sowie Mitteln zum Toleranzausgleich der Akkuzelle. Es können auch mehr als eine Akkuzelle vorhanden sein, z.B. zwei oder mehrere Akkuzellen miteinander zu einem Akkupack zusammen geschaltet sein. Der Akkupack eignet sich insbesondere zur Spannungsversorgung eines Elektrogeräts, ganz insbesondere einer Handwerkzeugmaschine. Die Akkuzellen haben typischerweise eine Zylinderform. Sie können prinzipiell aber auch jede andere geometrische Form haben.

Erfindungsgemäß weisen die Toleranzausgleichsmittel des Akkupacks mindestens ein Spreizelement auf, welches in einem Zwischenraum zwischen mindestens zwei Akkuzellen und/oder zwischen der einen Akkuzellen und dem Gehäuse angeordnet ist Das Gehäuse des Akkupacks ist vorzugsweise formstabil. Es kann im konstruktiven Sinne als steif angesehen werden. Mit Hilfe der Spreizelemente gelingt es, die Toleranzen der Akkuzellen in dem formstabilen Gehäuse auszugleichen, ohne dass sich die Außenkontur des Gehäuses wesentlich ändert. Die Spreizelemente nehmen das aufgrund der maßlichen Toleranzen der Akkuzellen auftretende Spiel zwischen den Akkuzellen untereinander und/oder zwischen den Akkuzellen und dem Gehäuse auf.

Das Spreizelement kann beispielsweise zwischen zwei benachbarten Akkuzellen angeordnet sein. Es kann jedoch auch in dem Zellzwischenraum zwischen drei benachbarten Akkuzellen, die in etwa dreieckförmig zueinander angeordnet sind, eingebracht sein. Sind mindestens vier Akkuzellen vorhanden, die in Form eines Quadrates zueinander angeordnet sind,
so kann das Spreizelement in dem Zwischenraum zwischen diesen vier Akkuzellen angeordnet sein. Das Spreizelement kann auch zwischen der Innenwand des Akkupackgehäuses und

einer Akkuzelle oder zwischen der Innenwand des Akkupackgehäuses und zwei benachbarten Akkuzellen, die beide an der Innenwand anliegen, angeordnet sein.

Das Spreizelement ist in sich formelastisch. Es ist insbesondere größer bemessen als der Zwischenraum zwischen den Akkuzellen und/oder den Akkuzellen und dem Gehäuse, so dass beim Einfügen des Spreizelements in den Zwischenraum die an den Zwischenraum angrenzenden Akkuzellen auseinander gedrückt werden. Es ist aus einem thermoplastischen Material gebildet, weshalb einzelne Teilelemente des Spreizelements im Wesentlichen steif sind, während das Spreizelement als ganzes aufgrund seiner Form eine ausreichende Elastizität aufweist.

Vorzugsweise bestehen die Spreizelemente aus Polyethylen hoher Dichte (PE HD), welches den Vorteil hat, zum einen vergleichsweise elastisch und verformbar zu sein und zum anderen mit einer Wärmeleitfähigkeit von 0,4 bis 0,42 W/mK eine für Kunststoffe verhältnismäßige gute Wärmeleitfähigkeit zu haben, die mit der Wärmeleitfähigkeit der Akkuzellen selbst von 0,4 bis 0,5 W/mK vergleichbar ist. Die Spreizelemente können beispielsweise durch Spritzgießen hergestellt sein.

Vorzugsweise ist mindestens eine Wand des Spreizelements an die Kontur der Akkuzellen derart angepasst ist, dass sich das Spreizelement an die Akkuzellen anschmiegt. Die Außenwand des Spreizelements, welche an der Umfangsfläche einer Akkuzelle anliegt, bildet also eine zu der Umfangsfläche der Akkuzellen komplementäre Fläche.

Das Spreizelement ist aus mehreren Wänden gebildet, die einen Hohlraum begrenzen. Dies hat den Vorteil, dass auch nach der Montage des Spreizelements in einem Zwischenraum zwischen zwei oder mehreren Zellen und/oder zwischen Akkuzellen und dem Gehäuse ein Hohlraum in dem Zellenzwischenraum besteht. Dieser Hohlraum kann zur Kühlung der Akkuzellen dienen, beispielsweise in dem Kühlluft oder ein anders wärmeableitendes Medium durch den Hohlraum strömt. Die Erzeugung eines Kühlluftstromes in einem Akkupack mit Hilfe eines Gebläses in einer Handwerkzeugmaschine oder einem Ladegerät ist aus dem Stand der Technik bekannt.

Vorteilhafterweise ist die Form des Spreizelements außerdem im Hinblick auf den Wärmeübergang zwischen den Akkuzellen gestaltet. In einem Bereich, in dem ein Wärmeübergang zwischen zwei benachbarten Akkuzellen erwünscht ist und unterstützt werden soll, ist das zwischen den Akkuzellen angeordnete Spreizelement dergestalt, dass ein guter Wärmeübergang möglich ist. Dies kann dadurch erzielt werden, dass benachbarte Wände des Spreizelements aneinanderliegend angeordnet sind. Zwischen den aneinanderliegenden Wänden soll sich kein Luftspalt befinden, da er den Wärmeübergang stark reduzieren würde. Die aneinander liegenden Wände können beispielsweise auch ineinander übergehende Wände sein, so dass sie einstückig ausgebildet sind.

Demgegenüber ist in einem Bereich, in dem ein Wärmeübergang zwischen zwei benachbarten Akkuzellen unerwünscht ist und möglichst weitgehend unterbunden werden soll, das zwischen den Akkuzellen angeordnete Spreizelement dergestalt, dass der Wärmeübergang möglichst stark verringert ist, also kein guter Wärmeübergang möglich ist. Dies kann dadurch erreicht werden, dass zwischen benachbarten Wänden des Spreizelements ein Luftspalt ausgebildet ist, der den Wärmeübergang behindert. In diesem Bereich, wo kein Wärmeübergang stattfinden soll, wird also gerade vermieden, benachbarte Wände des Spreizelements aneinander anliegend anzuordnen.

Zur leichteren Montage des Spreizelements ist vorzugsweise eine Einfügehilfe an dem Spreizelement vorgesehen. Dies kann insbesondere eine Einführschräge sein, so dass das Spreizelement an seiner bei der Montage den Akkuzellen zugewandten Stirnseite einen geringeren Durchmesser hat als an seiner gegenüberliegenden Stirnseite. Dadurch werden die Akkuzellen beim Einführen des Spreizelements in den Zwischenraum zwischen benachbarten Akkuzellen allmählich gespreizt.

Ein Spreizelement, das zwischen zwei oder mehreren Akkuzellen oder zwischen dem Gehäuse und einem oder mehreren Akkuzellen anordenbar ist, kann zum Beispiel im Wesentlichen dieselbe axiale Länge haben wie die Akkuzellen. Dadurch können die Akkuzellen sicher und gleichmäßig über ihre gesamte axiale Länge auseinander gedrückt werden. Alternativ können in den Zwischenraum zwischen zwei oder mehreren Akkuzellen oder zwischen einem oder mehreren Akkuzellen und dem Gehäuse ausgehend von den beiden Stirnseiten der Akkuzellen auch jeweils ein Spreizelement eingeführt werden, welches relativ kurz ist im Vergleich zu der axialen Länge der Akkuzellen. Dies hat den Vorteil, dass die Spreizelemente leicht eingeführt werden können, weil die notwendige Presskraft kleiner ist als bei vergleichsweise langen Spreizelementen. Trotzdem wird eine gleichmäßige Spreizung der Akkuzellen erzielt.

Ein weiterer Gegenstand der Erfindung betrifft eine Handwerkzeugmaschine, welche zumindest einen erfindungsgemäßen Akkupack enthält.

Nachfolgend wird die Erfindung anhand der beigefügten Zeichnungen näher erläutert. Es zeigen
- Figur 1: eine Explosionsdarstellung eines erfindungsgemäßen Akkupacks
- Figur 2: einen Querschnitt durch einen efindungsgemäßen Akkupack
- Figur 3: ein Spreizelement im Querschnitt
- Figur 4: das Spreizelement nach Figur 3 in perspektivischer Ansicht.

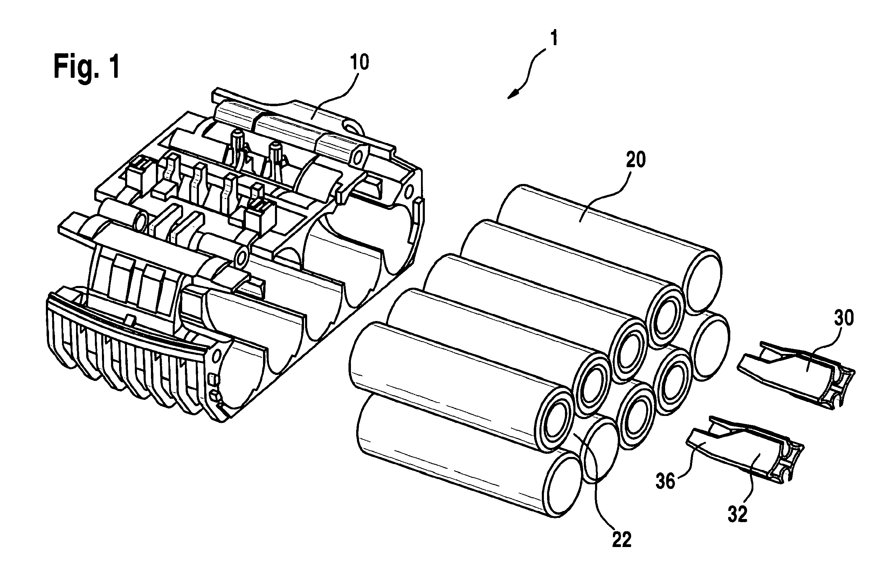

Die Explosionsdarstellung nach Fig. 1 zeigt einen Akkupack 1 mit einem Gehäuse 10 aus Kunststoff, mehreren zylinderförmigen Akkuzellen 20 und mehreren Spreizelementen 30. In der dargestellten Ausführungsform sind zehn Akkuzellen 20 in zwei parallelen Reihen zu je fünf Akkuzellen 20 aneinander angeordnet. Fig. 1 zeigt vereinfachend nur zwei Spreizelemente 30. Vorzugsweise ist jedoch immer ein Spreizelement 30 in einem von vier benachbarten Akkuzellen 20 gebildeten Zwischenraum 22 vorgesehen. Zur vollständigen Montage des Akkupacks 1 an z.B. eine Handwerkzeugmaschine (nicht dargestellt) umfasst das Gehäuse 10 weitere Gehäuseteile, z.B. Seitenwände, sowie elektrische Kontakte, die hier der besseren Übersichtlichkeit wegen nicht dargestellt sind.

Das Gehäuse 10 des Akkupacks 1 ist formstabil. Die Spreizelemente 30 bewirken, dass die Akkuzellen 20 trotz ihrer zum Teil erheblichen maßlichen Toleranzen im Wesentlichen spielfrei in dem Akkupackgehäuse 10 aufgenommen sind. Dabei verformt sich die Außenkontur des Gehäuses 10 nicht.

Das Spreizelement 30 ist in sich formelastisch. Es besteht aus PE HD, welches im Vergleich zu anderen thermoplastischen Kunststoffen vergleichsweise elastisch und verformbar ist. Das Spreizelement weist als ganzes aufgrund seiner Form eine ausreichende Elastizität auf. Es ist im nicht montierten Zustand im Durchmesser größer bemessen als der Zwischenraum 22 zwischen den Akkuzellen 20. Dadurch werden beim Einfügen des Spreizelements 30 in den Zwischenraum 22 die an den Zwischenraum 22 angrenzenden Akkuzellen 20 auseinander gedrückt.

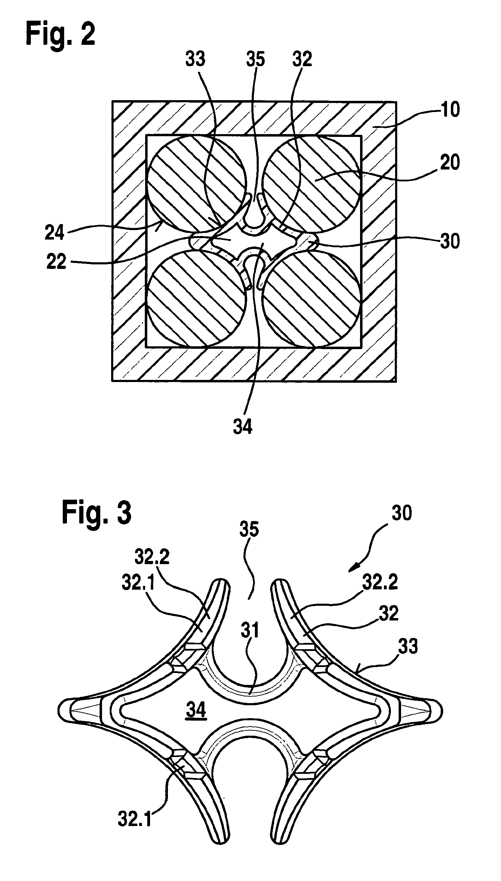

Wie in Fig. 2 zu erkennen ist, liegt das Spreizelement 30 an den Umfangsflächen 24 der vier Akkuzellen 20 an. Dazu umfasst das Spreizelement 30 vier Wände 32, welche derart an die Umfangsflächen 24 der Akkuzellen 20 angepasst sind, dass sich das Spreizelement 30 an die Akkuzellen 20 anschmiegt. Die Außenfläche 33 der Wände 32 des Spreizelements 30 bildet also eine zu der Umfangsfläche 24 der Akkuzellen 20 komplementäre Fläche.

In Fig. 3 ist gezeigt, dass die Wände 32 des Spreizelements 30 zusammen mit weiteren Wänden 31 einen Hohlraum 34 begrenzen. So besteht auch nach der Montage des Spreizelements 30 in dem Zwischenraum 22 ein Hohlraum, der zur Kühlung der Akkuzellen beispielsweise mittels Kühlluft dient.

Besteht ein Akkupack 1 aus mehreren Akkuzellen 20, wie z.B. in Fig. 1 dargestellt, kann es wünschenswert sein, wenn in dem Akkupack 1 der Wärmeübergang zwischen benachbarten Akkuzellen 20 nicht in allen Richtungen gleich gut erfolgt. Der in Fig. 1 dargestellt Akkupack 1 wird mit seiner Oberseite an einer Handwerkzeugmaschine angebracht. Bei diesem Akkupack 1 soll ein guter Wärmeübergang in vertikaler Richtung, also zwischen einer Akkuzelle 20 der einen Reihe und einer benachbarten Akkuzelle der anderen Reihe, erfolgen. Dagegen soll der Wärmeübergang in horizontaler Richtung, also zwischen benachbarten Akkuzellen einer Reihe, möglichst stark reduziert werden. Das Spreizelement 30 ist hierfür in besonderer Weise gestaltet, indem in vertikaler Richtung benachbarte Wände 32.1 aneinanderliegend angeordnet sind, so dass sich kein Luftspalt zwischen den Wänden 32.1 bzw. zwischen den übereinander liegenden Akkuzellen 20 befindet, welcher den Wärmeübergang reduzieren könnte. So sind die beiden Wände 32.1 so gestaltet, dass sie ineinander übergehen. Sie sind einstückig ausgebildet. In horizontaler Richtung benachbarte Wände 32.2 hingegen liegen nicht aneinander an. Durch ihre Krümmung laufen die Wände 32.2 zwar aufeinander zu, sie berühren einander jedoch nicht. So bildet sich ein Luftspalt 35 zwischen den Wänden 32.2 und damit zwischen den horizontal benachbarten Akkuzellen 20 aus.

Das Spreizelement 30 ist weiterhin mit einer Einfügehilfe 36 versehen, welche die Montage des Spreizelements erleichtert. Als Einfügehilfe 36 dienen Einführschrägen, mit deren Hilfe das Spreizelement 30 beim Einführen an den Akkuzellen 20 entlang gleitet, um diese zu spreizen. Durch die Einfügehilfe 36 in Form von Einführschrägen hat das Spreizelement 30 an seiner bei der Montage den Akkuzellen 20 zugewandten Stirnseite 37 einen geringeren Durchmesser als an seiner gegenüberliegenden Stirnseite.

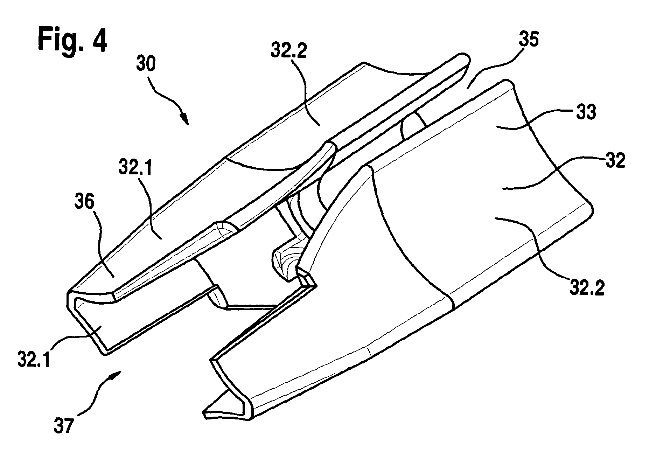

Wie Fig. 1 und 4 zu entnehmen ist, ist das Spreizelement 30 im Vergleich zu der axialen Länge der Akkuzellen 20 relativ kurz ausgeführt. Dies hat den Vorteil, dass beim Einführen des Spreizelements 30 in den Zwischenraum 22 nur ein kurzer Weg zurückgelegt werden muss und damit die notwendige Presskraft vergleichsweise gering ist. Damit dennoch eine gleichmäßige Spreizung über die gesamte axiale Länge der Akkuzellen 20 erreicht wird, werden in den Zwischenraum 22 von beiden Stirnseiten der Akkuzellen 20 her jeweils ein Spreizelement 30 eingeführt. Alternativ könnten die Spreizelemente 30 auch länger ausgeführt sein, mit dem Nachteil, dass die Presskraft beim Einführen größer wäre.

## Patentansprüche

1. Akkupack mit einem Gehäuse (10) und mindestens einer Akkuzelle (20) sowie Mitteln zum Toleranzausgleich der Akkuzelle (20), wobei die Toleranzausgleichsmittel mindestens ein Spreizelement (30) aufweisen, welches in einem Zwischenraum (22) zwischen mindestens zwei Akkuzellen (20) und/oder zwischen der einen Akkuzelle (20) und dem Gehäuse (10) angeordnet ist, **dadurch gekennzeichnet, dass** das Spreizelement (30) aus thermoplastischem Material formelastisch ist und mehrere, einen Hohlraum (34) begrenzende Wände (32, 31) aufweist, wobei das Spreizelement (30) aufgrund seiner Form eine ausreichende Elastizität derart aufweist, dass beim Einfügen des Spreizelements (30) in den Zwischenraum (22) die an den Zwischenraum (22) angrenzenden Akkuzellen (20) auseinander gedrückt werden.

2. Akkupack nach Anspruch 1, **dadurch gekennzeichnet, dass** das formelastische Spreizelement (30) größer bemessen ist als der Zwischenraum (22), so dass beim Einfügen des Spreizelements (30) in den Zwischenraum (22) die an den Zwischenraum (22) angrenzenden Akkuzellen (20) auseinander gedrückt werden.

3. Akkupack nach einem der vorhergehenden Ansprüche, **dadurch gekennzeichnet, dass** mindestens eine Wand (32) des Spreizelements (30) an die Umfangsfläche (24) der Akkuzellen (20) derart angepasst ist, dass sich das Spreizelement (30) an die Akkuzellen (20) anschmiegt.

4. Akkupack nach einem der vorhergehenden Ansprüche, **dadurch gekennzeichnet, dass** benachbarte Wände (32.1) des Spreizelements (30) aneinander liegen, so dass ein guter Wärmeübergang möglich ist.

5. Akkupack nach einem der vorhergehenden Ansprüche, **dadurch gekennzeichnet, dass** zwischen benachbarten Wänden (32.2) des Spreizelements (30) ein Luftspalt (35) ausgebildet ist, so dass der Wärmeübergang verringert ist.

6. Akkupack nach einem der vorhergehenden Ansprüche, **dadurch gekennzeichnet, dass** das Spreizelement (30) eine Einfügehilfe (36) aufweist.

7. Handwerkzeugmaschine enthaltend zumindest einen Akkupack nach einem der vorhergehenden Ansprüche.

## Claims

1. Battery pack with a housing (10) and with at least one battery cell (20) and also with means with a tolerance compensation of the battery cell (20), the tolerance compensation means having at least one spreading element (30) which is arranged in an interspace (22) between at least two battery cells (20) and/or between one battery cell (20) and the housing (10), **characterized in that** the spreading element (30) made from thermoplastic material is dimensionally elastic and has a plurality of walls (32, 31) delimiting a cavity (34), the spreading element (30) having sufficient elasticity by virtue of its form, such that, when the spreading element (30) is inserted into the interspace (22), the battery cells (20) adjacent to the interspace (22) are pressed apart from one another.

2. Battery pack according to Claim 1, **characterized in that** the dimensionally elastic spreading element (30) has a larger dimensioning than the interspace (22), so that, when the spreading element (30) is inserted into the interspace (22), the battery cells (20) adjacent to the interspace (22) are pressed apart from one another.

3. Battery pack according to one of the preceding claims, **characterized in that** at least one wall (32) of the spreading element (30) is adapted to the circumferential surface (24) of the battery cells (20) in such a way that the spreading element (30) fits snugly against the battery cells (20).

4. Battery pack according to one of the preceding claims, **characterized in that** adjacent walls (32.1) of the spreading element (30) lie one against the other so that good heat transfer is possible.

5. Battery pack according to one of the preceding claims, **characterized in that** an air gap (35) is formed between adjacent walls (32.2) of the spreading element (30), so that heat transfer is reduced.

6. Battery pack according to one of the preceding claims, **characterized in that** the spreading element (30) has an insertion aid (36).

7. Hand-operated machine tool containing at least one battery pack according to one of the preceding claims.

## Revendications

1. Bloc d'accumulateurs doté d'un boîtier (10) et d'au moins une cellule d'accumulateur (20) ainsi que de moyens de compensation des tolérances des cellules d'accumulateurs (20),
les moyens de compensation de tolérance présentant au moins un élément d'écartement (30) qui est disposé dans l'espace intermédiaire (22) entre au moins deux cellules d'accumulateurs (20) et/ou entre une cellule d'accumulateur (20) et le boîtier (10),
**caractérisé en ce que**
l'élément d'écartement (30) est réalisé en un matériau thermoplastique de forme élastique et présente plusieurs parois (32, 31) qui délimitent une cavité (34), l'élément d'écartement (30) présentant du fait de sa forme une élasticité suffisante pour, lors de l'insertion de l'élément d'écartement (30) dans l'espace intermédiaire (22), écarter l'une de l'autre les cellules d'accumulateur (20) adjacentes à l'espace intermédiaire (22).

2. Bloc d'accumulateurs selon la revendication 1, **caractérisé en ce que** l'élément d'écartement (30) de forme élastique a des dimensions plus grandes que l'espace intermédiaire (22) de sorte que lorsque l'élément d'écartement (30) est inséré dans l'espace intermédiaire (22), les cellules d'accumulateur (20) adjacentes à l'espace intermédiaire (22) sont écartées l'une de l'autre.

3. Bloc d'accumulateurs selon l'une des revendications précédentes, **caractérisé en ce qu'**au moins une paroi (32) de l'élément d'écartement (30) est adaptée à la surface périphérique (24) des cellules d'accumulateur (20) de telle sorte que l'élément d'écartement (30) épouse la surface des cellules d'accumulateur (20).

4. Bloc d'accumulateurs selon l'une des revendications précédentes, **caractérisé en ce que** des parois voisines (32.1) de l'élément d'écartement (30) reposent l'une contre l'autre de manière à permettre un bon transfert de chaleur.

5. Bloc d'accumulateurs selon l'une des revendications précédentes, **caractérisé en ce qu'**entre des parois voisines (32.2) de l'élément d'écartement (30) est formé un interstice (35) qui diminue le transfert de chaleur.

6. Bloc d'accumulateurs selon l'une des revendications précédentes, **caractérisé en ce que** l'élément d'écartement (30) présente un accessoire d'insertion (36).

7. Outil manuel à moteur contenant au moins un bloc d'accumulateurs selon l'une des revendications précédentes.
